(19)

**Europäisches Patentamt**
**European Patent Office**
**Office européen des brevets**

(11) **EP 3 971 804 A1**

(12) **EUROPEAN PATENT APPLICATION**

(43) Date of publication:
**23.03.2022  Bulletin 2022/12**

(21) Application number: **21197621.2**

(22) Date of filing: **20.09.2021**

(51) International Patent Classification (IPC):
**G06Q 10/00** (2012.01)  **B60S 5/00** (2006.01)

(52) Cooperative Patent Classification (CPC):
**G06Q 10/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2020  EP 20425037**

(71) Applicant: **Shell Internationale Research Maatschappij B.V.**
**2596 HR The Hague (NL)**

(72) Inventors:
• **KRAL, Vaclav**
  **140 00 Prague (CZ)**
• **GIANASCHI, Andrea**
  **20099 Milano (IT)**

(74) Representative: **Shell Legal Services IP**
**PO Box 384**
**2501 CJ The Hague (NL)**

(54) **CO2 SAVINGS MONITORING SYSTEM**

(57)  The invention provides a method comprising:
a) recording an oil change service carried out on a vehicle or device and recording data corresponding to the age of the vehicle or device, the amount and type of oil removed from said vehicle or device; the amount and type of fresh oil applied to said vehicle or device; and the location of the oil change service on a local input device;
b) sending the recorded data from the input device to a memory coupled to the input device and storing said recorded data, wherein the memory also has stored on it: data on relative fuel efficiency and $CO_2$ savings for different oil types; and
c) determining, using a processor coupled to said memory, on the basis of the data received and stored, savings data, said savings data comprising the energy savings to be achieved by the vehicle during its operation after the oil change service;
d) sending said savings data to a server configured to receive the savings data and compile the information for any specified group of local systems; and
e) displaying the savings data on one or more display devices coupled to the server,
wherein the savings data is determined by calculating the difference in fuel economy between the M111 Fuel economy test result for the new type of oil and the M111 Fuel economy test result for the type of oil removed from the vehicle or device.

Figure 3

**Description**

Field of the Invention

The present invention relates to a method and system for calculating, compiling and displaying energy, cost and $CO_2$ savings related to lubricants usage.

Background of the Invention

An average European contributes approximately 7 mt per year to $CO_2$ emissions (source: ourworldindata.org, 2017). Many technologies are being developed to minimise $CO_2$ emissions and to assess the impact of said mitigation. As well as those technologies that make dramatic changes to lifestyles, even simple changes can be made within normal processes and procedures that can help reduce $CO_2$ emissions.

Internal combustion engine (ICE) vehicle operations are a considerable source of $CO_2$ emissions. Improving energy efficiency in ICEs is one of the quickest and cheapest ways to address environmental challenges. For any powered equipment with moving parts, reducing friction and using efficient lubrication can help minimize energy use and thus reduce $CO_2$ emissions. These small improvements, when added together for thousands of motorists can result in large energy and $CO_2$ savings.

To help ensure increased fuel economy without compromising on wear protection or oil life, the latest fuel-efficient oils need to deliver at least the same wear protection and can additionally help to extend oil life as their less efficient counterparts.

Use of lower viscosity engine oils, such as SAE 0W viscosity grade engine oils, can reduce friction and is known to provide energy efficiency and $CO_2$ savings. Such oils continue to be developed and improved in cooperation with original equipment manufacturers (OEMs). However, it is important to ensure that after-market oil changes are selected to provide optimal efficiency and fuel savings.

Current practice is to provide a predicted fuel economy improvement for a new oil assessed against an industry standard. For passenger car motor oils, the reference used in the industry standard is usually an SAE 15W-40 oil. However, the improvement over such a standard does not reflect the real-life situation which depends on the original oil in the vehicle.

The actual savings for a single oil change depends on a rage of metrics, such as vehicle type, vehicle age, mileage and the oil being replaced. Allowing an individual customer to have accurate information about fuel and cost savings can incentivise $CO_2$-conscious decisions. With accurate information available, the cumulative effect of energy, cost and $CO_2$ savings may also easily be highlighted.

Summary of the Invention

To meet these needs, the present invention provides a method comprising:

a) recording an oil change service carried out on a vehicle or device and recording data corresponding to the age of the vehicle or device, the amount and type of oil removed from said vehicle or device; the amount and type of fresh oil applied to said vehicle or device; and the location of the oil change service on a local input device;

b) sending the recorded data from the input device to a memory coupled to the input device and storing said recorded data, wherein the memory also has stored on it: data on relative fuel efficiency and $CO_2$ savings for different oil types; and

c) determining, using a processor coupled to said memory, on the basis of the data received and stored, savings data, said savings data comprising the energy savings to be achieved by the vehicle during its operation after the oil change service;

d) sending said savings data to a server configured to receive the savings data and compile the information for any specified group of local systems; and

e) displaying the savings data on one or more display devices coupled to the server,

wherein the savings data is determined by calculating the difference in fuel economy between the Mill Fuel economy test result for the new type of oil and the M111 Fuel economy test result for the type of oil removed from the vehicle or device.

The present invention also provides a system for carrying out said process, said system comprising:

a) one or more local input devices configured to record an oil change service carried out on a vehicle or device and record data corresponding to the age of the vehicle or device, the amount and type of oil removed from said vehicle or device; the amount and type of fresh oil applied to said vehicle or device; and the location of the oil change service;

b) a memory coupled to the input device and configured to receive the recorded data from the input device and to store the recorded data and also to store data on relative fuel efficiency and $CO_2$ savings for different oil types; and

c) a processor coupled to the memory and configured to determine, on the basis of the data received and stored, the savings data, said savings data comprising the energy savings, $CO_2$ savings and cost savings to be achieved by the vehicle during its operation after the oil change service;

d) a server configured to receive the savings data and compile the information for any specified group of local systems; and

e) one or more display devices coupled to the server to display the savings data and/or the grouped savings data.

Brief Description of the Drawings

The accompanying drawings, which are included to provide a further understanding of the disclosed subject matter, are incorporated in and constitute a part of this specification. The drawings also illustrate embodiments of the disclosed subject matter and together with the detailed description serve to explain the principles of embodiments of the disclosed subject matter. No attempt is made to show structural details in more detail than may be necessary for a fundamental understanding of the disclosed subject matter and various ways in which it may be practiced.

Figure 1 shows an example system according to an implementation of the disclosed subject matter.

Figure 2 shows a second example system according to an implementation of the disclosed subject matter.

Figure 3 shows an example communication flow according to an implementation of the disclosed subject matter.

Detailed Description of the Invention

The system and method of the present invention allow an improved, accurate determination of savings data, including the energy, cost and $CO_2$ savings, that can be achieved by a vehicle or device during its operation after an oil change service. Energy savings as used herein typically refers to fuel savings. This data can be displayed for an individual oil change service and/or compiled for multiple oil change services in a single or multiple location. For example, an individual car service centre may have a display indicating the energy, cost and $CO_2$ savings achieved by its work over a prescribed period of time. The data may also be combined for different groupings, for example a group of service centres, or on a national/regional basis.

The system comprises one or more local input devices. In the method of the present invention, the input devices are used for recording an oil change service carried out on a vehicle or device and recording data corresponding to the age of the vehicle or device, the amount and type of oil removed from said vehicle or device; and the amount and type of fresh oil applied to said vehicle or device. Other data recorded may include vehicle or device registration, type of fuel system, (gasoline or diesel and/or hybrid), total mileage, average fuel consumption.

In practice, details of an individual oil change service will be entered into the local input device by a member of staff, such as a technician at a car service centre or garage.

The input device may be a local computer, smart phone or tablet or the like. In one embodiment, the input device is a mobile device loaded with a user interface system or 'app'. Alternatively, the user interface may be via a human-readable web page, to which the service centre has a unique login.

The system also includes a memory. Said memory is coupled to the input device and data is sent to the memory from the input device. The memory also stores data on relative energy/fuel efficiency and $CO_2$ savings for different oil types. The memory preferably also stores information relating to known factors influencing the relative fuel efficiency for different fuel types, such as one or more of vehicle/device makes and models, vehicle/device age and usage style (e. g. average fuel consumption).

Data on relative fuel/energy efficiency is derived from M111 Fuel Economy tests using 15W-40 as a reference. However, rather than merely using the figure for improvement over the reference oil, the difference in fuel economy between the old oil and the new oil is calculated. The difference in fuel economy may be obtained by assessing the difference between the two lubricants used both measured against industry standard M111 FE.

Greenhouse Gas (GHG) intensity factor, on the basis of JEC WtW Study v4.a, 2014, may also be applied.

A simple representation of the foregoing by means of equations is set out below (terms used are defined in Table 1:

$$IIVR = INLFE - ICLFE$$

$$IIVR \geq 0 \; \rightarrow IIVR = INLFE - ICLFE$$

$$IIVR < 0 \rightarrow IIVR = 0$$

For calculation of individual $CO_2$ savings, the following equations applies:

$$IACO_2V_i = IFCO_2 * IM_i * IIVR_i * \frac{AFc_i}{100}$$

Total $CO_2$ savings ($TCO_2$) may then be calculated per unit of time:

$$TCO_2 = \sum_{i=1}^{Vn} IACO_2 V_i$$

For calculation of individual fuel savings, the following equations applies:

$$IAFV_i = IM_i * IIVR_i * \frac{AFc_i}{100}$$

The total fuel savings may then be calculated per unit of time:

$$TF = \sum_{i=1}^{Vn} IAF V_i$$

Individual annual cost savings, may be calculated using the following equation:

$$IASV_I = IM_i * \frac{AFc_i}{100} * IIVR_i * \text{AvgFP} +$$

$$\left\{ \left[ \left( \frac{IM_i}{IODIC_i} \right) * (IOVT_i + IOTUC_i) * \left( \frac{PPLC}{IM_i} \right) \right] - \left[ \left( \frac{IM_i}{IODIN_i} \right) * (IOVT_i + IOTUN_i) * \left( \frac{PPLN}{IM_i} \right) \right] \right\} * IM_i$$

Total cost savings may be calculated per unit of time:

$$TAS = \sum_{i=1}^{Vn} IASV_i$$

Table 1

| | |
|---|---|
| INLFE | ACEA MB111 test result for new lubricant |
| ICLFE | ACEA MB111 test result for current lubricant |
| IIVR | individual improvement in fuel economy |
| $IFCO_2$ | Individual $CO_2$ Conversion Factor[kg CO2/liter of Fuel] - constant depending on fuel type |
| $IACO_2V_i$ | Individual Annual $CO_2$ Reduction per vehicle [kg $CO_2$/year] |
| IMi | Individual mileage per year [km] |
| AFci | Average fuel consumption [liter/100km] |
| $TCO_2$ | Total Annual CO2 Reduction of fleet [kg CO2/year] |

(continued)

| Vn | Number of vehicles |
|---|---|
| $IAFV_i$ | Individual Annual Fuel Savings per vehicle [liter/year] |
| TF | Total fuel savings [liter/year] |
| $IASV_i$ | Individual Annual Savings per vehicle [euro/year] |
| AvgFP | Average fuel price [Euro/liter] |
| $IODIC_i$ | Individual Oil drain interval (ODI) current [km] |
| $IODIN_i$ | Individual Oil drain interval new [km] |
| $IOTUC_i$ | Individual Oil Top up per ODI current [liter] |
| $IOTUN_i$ | Individual Oil Top up per ODI new [liter] |
| $IOVT_i$ | Individual Oil volume in circulation [liter] |
| PPLC | Price per liter current [euro] |
| PPLN | Price per liter new [euro] |
| TAS | Total annual savings [euro/year] |

A processor is coupled to the memory. The processor applies an algorithm to the data available allowing calculation and determining of the expected total energy savings and $CO_2$ savings achieved by the oil change over a given period of time (e.g. a year). By linking the system to up-to-date fuel cost, an expected cost savings figure can also be determined.

This determination can be carried out in advance of the oil change, in order to incentivise the use of fuel-efficient oils. In this embodiment, the result of such a determination would not be added to a set of cumulative statistics. In a preferred embodiment, data input and the determination are carried out after an oil change and are added to a set of cumulative statistics.

A server also forms part of the system savings data is sent to said server where the information for any specified group of local systems is compiled. For example, the server may compile the data for an individual service centre, allowing display locally of the savings data achieved at that location over a period of time. Again, this may be used to incentivise selling of fuel-efficient oils.

The data may also be compiled for groups of service centres, e.g. for a single company or region. Savings data may also be compiled for service centres selling specific oils within a region or country or for the sales of specific oils for any grouping.

The memory, processor, server and one or more displays may be located locally, in the vicinity of the local input device, or these sections of the system may be located remotely. In one embodiment, the input device forms part of a local system comprising said device, the memory and the processor. Fuel, cost and $CO_2$ savings for an oil change are determined locally and may be uploaded automatically to a remote server.

In another embodiment, the input device provides data directly to a remote server and fuel, cost and $CO_2$ savings for an oil change are determined remotely with the memory and processor located at the remote server.

The displays may be any suitable device and may be accessed as a website or on a mobile app. For example, a service centre may have a dedicated display within the service centre highlighting cumulative savings made within a specific time period. Alternatively, the display may be available on a publicly available website.

Detailed Description of the Drawings

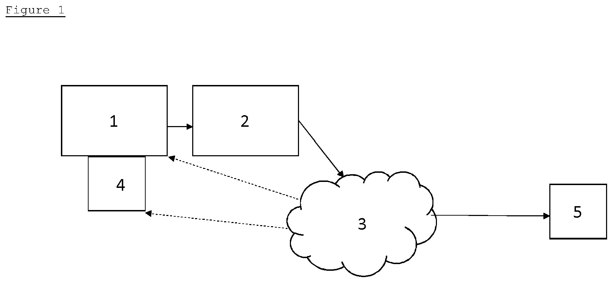

Figure 1 illustrates a system according to the present invention. An input device 1 is used to record an oil change service. Data is received by the input device and is processed locally in a local system 3 comprising a memory and a processor. In the embodiment that the determination is carried out in advance of the oil change, the savings data is provided back to the local input device 1 in order to inform the technician or customer before making an oil selection. Alternatively, once the oil change has been completed and indicated as so in the system, the savings data can be supplied to the server 3 , which updates both the local display 4 and further displays 5 in one or more other locations.

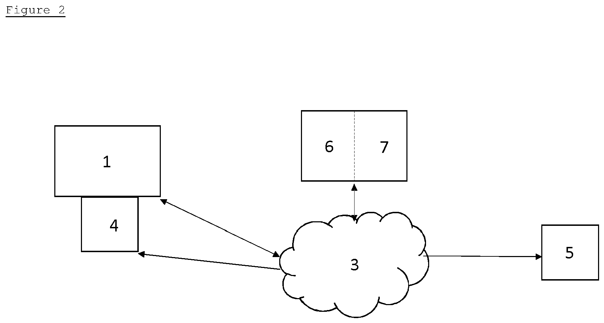

Figure 2 provides a further illustration of a system according to the present invention. An input device 1 is used to record an oil change service. Data is received by the input device and is sent to the remotely located server 3. A memory 6 receives the recorded data and the savings data is determined in the processor 7. In the embodiment that the determination is carried out in advance of the oil change, the savings data is provided back to the local input device 1 in order to inform the technician or customer before making an oil selection.

Alternatively, once the oil change has been completed and indicated as such in the system, the savings data can be supplied back to the local input device and/or a local display 4. Once the oil change has been completed, compiled information from the server may also be sent to displays 5 in one or more other locations and/or a locally located display 4.

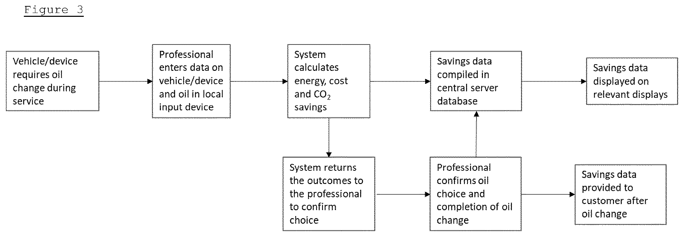

Figure 3 shows an example communication flow according to an implementation of the disclosed subject matter. A vehicle or device requires an oil change during a service. The professional carrying out the service enters the data relating to the vehicle/device into the local input device. The data will include the age of the vehicle or device, the amount and type of oil removed from said vehicle or device; the amount and type of fresh oil applied to said vehicle or device; and the location of the oil change service. Other data may include the make and model of the vehicle or device, the fuel used by the vehicle or device and, for a vehicle, the annual mileage. The system calculates the energy, cost and $CO_2$ savings.

In one embodiment, this data is compiled in the central database in the server and the relevant displays are updated.

In another embodiment, the data is returned to the professional to indicate expected savings for the oil selected. This data can be used before an oil change in order to inform the professional and/or customer of potential savings for one or more oils. In this embodiment, the professional then confirms the oil choice and that the oil change has been completed. The savings data is then compiled in a database in the central server and the relevant displays are updated.

**Claims**

1. A method comprising:

   a) recording an oil change service carried out on a vehicle or device and recording data corresponding to the age of the vehicle or device, the amount and type of oil removed from said vehicle or device; the amount and type of fresh oil applied to said vehicle or device; and the location of the oil change service on a local input device;
   b) sending the recorded data from the input device to a memory coupled to the input device and storing said recorded data, wherein the memory also has stored on it: data on relative fuel efficiency and $CO_2$ savings for different oil types; and
   c) determining, using a processor coupled to said memory, on the basis of the data received and stored therein, savings data, said savings data comprising the energy savings to be achieved by the vehicle during its operation after the oil change service;
   d) sending said savings data to a server configured to receive the savings data and compile the information for any specified group of local systems; and
   e) displaying the savings data on one or more display devices coupled to the server,

   wherein the savings data is determined by calculating the difference in fuel economy between the M111 Fuel economy test result for the new type of oil and the M111 Fuel economy test result for the type of oil removed from the vehicle or device.

2. A method according to Claim 1, wherein $CO_2$ savings and cost savings are also calculated on the basis of the energy savings calculated in step c).

3. A system for carrying out the process of Claim 1, said system comprising:

   a) one or more local input devices configured to record an oil change service carried out on a vehicle or device and record data corresponding to the age of the vehicle or device, the amount and type of oil removed from said vehicle or device; the amount and type of fresh oil applied to said vehicle or device; and the location of the oil change service;
   b) a memory coupled to the input device and configured to receive the recorded data from the input device and to store the recorded data and also to store data on relative fuel efficiency and $CO_2$ savings for different oil types; and
   c) a processor coupled to the memory and configured to determine, on the basis of the data received and stored, the savings data, said savings data comprising the energy savings, $CO_2$ savings and cost savings to be achieved by the vehicle during its operation after the oil change service;
   d) a server configured to receive the savings data and compile the information for any specified group of local systems; and

e) one or more display devices coupled to the server to display the savings data and/or the grouped savings data.

Figure 1

Figure 2

Figure 3

```
┌─────────────┐    ┌─────────────┐    ┌─────────────┐       ┌─────────────┐    ┌─────────────┐
│ Vehicle/    │    │ Professional│    │ System      │       │ Savings data│    │ Savings data│
│ device      │───▶│ enters data │───▶│ calculates  │──────▶│ compiled in │───▶│ displayed on│
│ requires oil│    │ on vehicle/ │    │ energy, cost│       │ central     │    │ relevant    │
│ change      │    │ device and  │    │ and CO2     │       │ server      │    │ displays    │
│ during      │    │ oil in local│    │ savings     │       │ database    │    │             │
│ service     │    │ input device│    └─────────────┘       └─────────────┘    └─────────────┘
└─────────────┘    └─────────────┘          │                     ▲
                                             ▼                     │
                                      ┌─────────────┐       ┌─────────────┐    ┌─────────────┐
                                      │ System      │       │ Professional│    │ Savings data│
                                      │ returns the │       │ confirms oil│    │ provided to │
                                      │ outcomes to │──────▶│ choice and  │───▶│ customer    │
                                      │ the         │       │ completion  │    │ after oil   │
                                      │ professional│       │ of oil      │    │ change      │
                                      │ to confirm  │       │ change      │    │             │
                                      │ choice      │       └─────────────┘    └─────────────┘
                                      └─────────────┘
```

Europäisches
Patentamt
European
Patent Office
Office européen
des brevets

# EUROPEAN SEARCH REPORT

Application Number

EP 21 19 7621

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 185781 A (COSMO OIL LUBRICANTS CO LTD) 27 September 2012 (2012-09-27) * paragraph [0023]; figure 1 * | 1-3 | INV. G06Q10/00 B60S5/00 |
| X | KR 2019 0040643 A (PARK JONG KWAN [KR]) 19 April 2019 (2019-04-19) * figure 1 * | 1-3 | |
| X | US 2014/012553 A1 (KELLY NGUASHIMA [US] ET AL) 9 January 2014 (2014-01-09) * paragraphs [0024], [0029]; figures 1-2 * | 1-3 | |

TECHNICAL FIELDS
SEARCHED        (IPC)

G06Q
B60S

The present search report has been drawn up for all claims

| Place of search | Date of completion of the search | Examiner |
|---|---|---|
| Munich | 3 February 2022 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 7621

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2022

| Patent document cited in search report | Publication date | Patent family member(s) | Publication date |
|---|---|---|---|
| JP 2012185781 A | 27-09-2012 | JP 5653797 B2<br>JP 2012185781 A | 14-01-2015<br>27-09-2012 |
| KR 20190040643 A | 19-04-2019 | NONE | |
| US 2014012553 A1 | 09-01-2014 | NONE | |

EPO FORM P0459

For more details about this annex : see Official Journal of the European Patent Office, No. 12/82